# EUROPEAN PATENT APPLICATION

(11) **EP 4 807 920 A1**
(43) Date of publication of application: **16.09.2026**
(21) Application number: 25775695.7
(22) Date of filing: 26.02.2025
(51) Int. Cl.: H01S 3/10, G02F 1/365, H01S 3/23

(54) **VARIABLE-WAVELENGTH LIGHT SOURCE AND VARIABLE-WAVELENGTH METHOD**

(30) Priority: 28.03.2024 JP 2024054943
(71) Applicant: Hamamatsu Photonics K.K., Hamamatsu-shi, Shizuoka 435-8558 (JP); RIKEN, Wako-shi, Saitama 351-0198 (JP)
(72) Inventor: TOUME, Kento, Hamamatsu-shi, Shizuoka 435-8558 (JP); SEUE, Hideaki, Hamamatsu-shi, Shizuoka 435-8558 (JP); ISOBE, Keisuke, Wako-shi, Saitama 351-0198 (JP); MIDORIKAWA, Katsumi, Wako-shi, Saitama 351-0198 (JP)
(74) Representative: Grünecker Patent- und Rechtsanwälte PartG mbB
(86) International application number: PCT/JP2025/006694
(87) International publication number: WO 2025/204444

(57) **Abstract**

A variable-wavelength light source comprises: a light output unit configured to output light and vary a wavelength of the light to be output; a first optical amplification unit configured to amplify the light output by the light output unit; a filter unit configured to filter the light amplified by the first optical amplification unit; and a second optical amplification unit configured to amplify the light filtered by the filter unit. The first optical amplification unit has a gain on a first wavelength side higher than a gain on a second wavelength side, a second wavelength of the second wavelength side being different from a first wavelength of the first wavelength side. The second optical amplification unit has the gain on the second wavelength side higher than the gain on the first wavelength side. The filter unit attenuates amplified spontaneous emission.

## Description

### Technical Field

The present disclosure relates to a variable-wavelength light source and a variable-wavelength method.

### Background Art

As a variable-wavelength light source, a light source including an oscillation unit configured to oscillate pulsed light; and a modulation unit configured to modulate a wavelength of the pulsed light oscillated by the oscillation unit using a soliton self-frequency shift, wherein a wavelength of the pulsed light to be output is made variable by adjusting an intensity of the pulsed light before modulation is known (see, for example, Patent Literature 1).

### Citation List

### Patent Literature

[Patent Literature 1] Japanese Unexamined Patent Publication No. 2004-527001
[Patent Literature 2] PCT International Publication No. WO/2004/070898

### Summary of Invention

### Technical Problem

In the variable-wavelength light source described in Patent Literature 1, when the output light is amplified by an optical amplifier, amplified spontaneous emission (ASE) is generated, which not only hinders amplification but may also cause parasitic oscillation. In this case, it is conceivable to use an optical amplifier that satisfies desired conditions so that amplified spontaneous emission is not generated, but there are cases where optical amplification is performed in a wavelength band in which it is difficult to use such an optical amplifier. Moreover, even if optical amplification is performed in a wavelength band in which such an optical amplifier can be used, because the wavelength of light is variable, for example, if an optical amplifier adapted to conditions for light on a short-wavelength side is used, it becomes difficult to amplify light on a long-wavelength side, and vice versa. This is particularly noticeable when the difference between short and long wavelengths is large, that is, when optical amplification is performed over a wide wavelength band (for example, when optical amplification is performed over a wavelength band spanning 400 nm, like optical amplification in a wavelength range of 1800 nm to 2200 nm). This is because, as the wavelength band becomes wider, the difference in gain of the optical amplifier depending on wavelength becomes larger, and in such a case, when attempting to amplify light at a wavelength having low gain, light at a wavelength having high gain tends to be preferentially amplified. On the other hand, in a specific wavelength band, for example, a wavelength band including 1550 nm, optical amplification can be performed by arranging a filter for gain equalization between optical amplifiers using two Er fibers (see, for example, Patent Literature 2). However, in this case, the applicable wavelength band is also about 150 nm, and therefore, it is required to reliably perform optical amplification over a wider wavelength band.

The present disclosure has been made in view of the above circumstances, and an objective thereof is to reliably amplify light over a wide wavelength band in a variable-wavelength light source and a variable-wavelength method in which a wavelength of light to be output is variable.

### Solution to Problem

A variable-wavelength light source according to the present disclosure is [1] "a variable-wavelength light source comprising: a light output unit configured to output light and vary a wavelength of the light to be output; a first optical amplification unit configured to amplify the light output by the light output unit; a filter unit configured to filter the light amplified by the first optical amplification unit; and a second optical amplification unit configured to amplify the light filtered by the filter unit, wherein the first optical amplification unit has a gain on a first wavelength side higher than a gain on a second wavelength side, a second wavelength of the second wavelength side being different from a first wavelength of the first wavelength side, wherein the second optical amplification unit has the gain on the second wavelength side higher than the gain on the first wavelength side, and wherein the filter unit attenuates amplified spontaneous emission."

In this variable-wavelength light source, when the wavelength of the output light is varied between a first wavelength side closer to a first wavelength than to a second wavelength (hereinafter also simply referred to as the "first wavelength side") and a second wavelength side closer to the second wavelength than to the first wavelength (hereinafter also simply referred to as the "second wavelength side"), the light can be amplified as follows. That is, light on the first wavelength side is amplified by the first optical amplification unit without the generation of ASE, and then amplified by the second optical amplification unit. Here, the second optical amplification unit has a higher gain on the second wavelength side, but because the light on the first wavelength side has already been amplified by the first optical amplification unit and thus is more likely to absorb energy, it is also possible to amplify the light on the first wavelength side in the second optical amplification unit while suppressing the generation of ASE. On the other hand, for example, light on the second wavelength side is not significantly amplified compared to the light on the first wavelength side, and thus ASE is generated, but the ASE can be attenuated by the filter unit. Subsequently, the light on the second wavelength side is amplified by the second optical amplification unit without the generation of ASE. Therefore, according to the present disclosure, in a variable-wavelength light source in which the wavelength of light to be output is variable, it is possible to reliably amplify the light while suppressing ASE over a wide wavelength band.

A variable-wavelength light source according to the present disclosure may be [2] "the variable-wavelength light source according to [1], wherein the light output unit is capable of outputting light in a wavelength band of 1800 to 2200 nm, and wherein the first optical amplification unit and the second optical amplification unit include a Tm fiber." In this case, it is possible to implement an amplification system for light of the wavelength band of 1800 to 2200 nm using the Tm fiber.

A variable-wavelength light source according to the present disclosure may be [3] "the variable-wavelength light source according to [1] or [2], wherein the first wavelength is shorter than the second wavelength." In this case, in the first optical amplification unit, amplification optimized for the short-wavelength side shorter than the second wavelength is possible, and in the second optical amplification unit, amplification optimized for the long-wavelength side longer than the first wavelength is possible.

A variable-wavelength light source according to the present disclosure may be [4] "the variable-wavelength light source according to any one of [1] to [3], wherein the filter unit attenuates the amplified spontaneous emission in a predetermined wavelength band including a wavelength band between the first wavelength and the second wavelength." In this case, the filter unit can effectively attenuate the amplified spontaneous emission generated by amplification of the first optical amplification unit.

A variable-wavelength light source according to the present disclosure may be [5] "the variable-wavelength light source according to any one of [1] to [4], wherein the light output unit includes: an oscillation unit configured to oscillate pulsed light; an amplification unit configured to broaden a spectrum of the pulsed light oscillated by the oscillation unit; a modulation unit configured to modulate a wavelength of the pulsed light whose spectrum has been broadened by the amplification unit using a soliton self-frequency shift; and a light intensity control unit arranged between the amplification unit and the modulation unit on an optical path of the pulsed light and configured to control an intensity of the pulsed light for each pulse." In this case, the wavelength of the generated pulsed light can be varied for each pulse by the light intensity control unit. Moreover, it is possible to suppress multi-soliton formation (a phenomenon in which pulsed light is split into a plurality of pulses according to modulation) by broadening the spectrum of the pulsed light before modulation using a soliton self-frequency shift is performed.

A variable-wavelength method according to the present disclosure is [6] "a variable-wavelength method comprising: a light output step of outputting light; a first optical amplification step of amplifying the light output in the light output step; a filtering step of filtering the light amplified in the first optical amplification step; and a second optical amplification step of amplifying the light filtered in the filtering step, wherein the light output step includes a step of varying a wavelength of the light to be output, wherein, in the first optical amplification step, the light is amplified by a first optical amplification unit having a higher gain on a first wavelength side of the light than on a second wavelength side different from the first wavelength, wherein, in the second optical amplification step, the light is amplified by a second optical amplification unit having the gain on the second wavelength side higher than the gain on the first wavelength side, and wherein, in the filtering step, amplified spontaneous emission of a predetermined wavelength band including a wavelength band between the first wavelength and the second wavelength is attenuated." Also, in the present disclosure, functions and effects similar to those of the above-described variable-wavelength light source are obtained. That is, in a variable-wavelength method in which the wavelength of light to be output is variable, it becomes possible to reliably amplify the light while suppressing ASE over a wide wavelength band.

The variable-wavelength method according to the present disclosure may be [7] "the variable-wavelength method according to [6], wherein, in the filtering step, energy is transferred from the light of the first wavelength to the light of the second wavelength." In this case, it is possible to adjust the wavelength dependence of a gain in both the first optical amplification unit and the second optical amplification unit by transferring energy from the light of the first wavelength to the light of the second wavelength.

### Advantageous Effects of Invention

According to the present disclosure, in a variable-wavelength light source and a variable-wavelength method in which the wavelength of light to be output is variable, it is possible to reliably amplify the light over a wide wavelength band.

### Brief Description of Drawings

FIG. 1 is a block diagram showing a variable-wavelength light source according to an embodiment.
FIG. 2(a) is a graph showing a temporal waveform of ultrashort pulsed light output from an oscillator of FIG. 1. FIG. 2(b) is a graph showing a spectrum of the ultrashort pulsed light output from the oscillator of FIG. 1. FIG. 2(c) is a graph showing a temporal waveform of ultrashort pulsed light output from a fiber amplifier of FIG. 1. FIG. 2(d) is a graph showing a spectrum of the ultrashort pulsed light output from the fiber amplifier of FIG. 1.
FIG. 3 is a graph showing a specific example of the spectrum of the ultrashort pulsed light output from the fiber amplifier of FIG. 1.
FIG. 4(a) is a graph showing a temporal waveform of ultrashort pulsed light output from an acousto-optic modulator of FIG. 1. FIG. 4(b) is a graph showing a spectrum of the ultrashort pulsed light output from the acousto-optic modulator of FIG. 1.
FIG. 5(a) is a graph showing a temporal waveform of ultrashort pulsed light output from a soliton shift fiber of FIG. 1. FIG. 5(b) is a graph showing a spectrum of the ultrashort pulsed light output from the soliton shift fiber of FIG. 1. FIG. 5(c) is a graph showing a temporal waveform of the ultrashort pulsed light output from the filter of FIG. 1. FIG. 5(d) is a graph showing a spectrum of the ultrashort pulsed light output from the filter of FIG. 1.
FIG. 6 is a flowchart showing a variable-wavelength method according to an embodiment.
FIG. 7(a) is an explanatory graph of an example of a case where short-wavelength ultrashort pulsed light is amplified. FIG. 7(b) is an explanatory graph of the continuation of FIG. 7(a). FIG. 7(c) is an explanatory graph of the continuation of FIG. 7(b). FIG. 7(d) is an explanatory graph of the continuation of FIG. 7(c).
FIG. 8(a) is an explanatory graph of an example of a case where long-wavelength ultrashort pulsed light is amplified. FIG. 8(b) is an explanatory graph of the continuation of FIG. 8(a). FIG. 8(c) is an explanatory graph of the continuation of FIG. 8(b). FIG. 8(d) is an explanatory graph of the continuation of FIG. 8(c).
FIG. 9 is a graph showing relationships between an absorption cross-sectional area of a Tm fiber, a stimulated emission cross-sectional area, transmittance of a filter, and a wavelength.

### Description of Embodiments

Hereinafter, embodiments will be described in detail with reference to the drawings. In the drawings, identical or corresponding parts are denoted by the same reference signs, and redundant descriptions will be omitted.

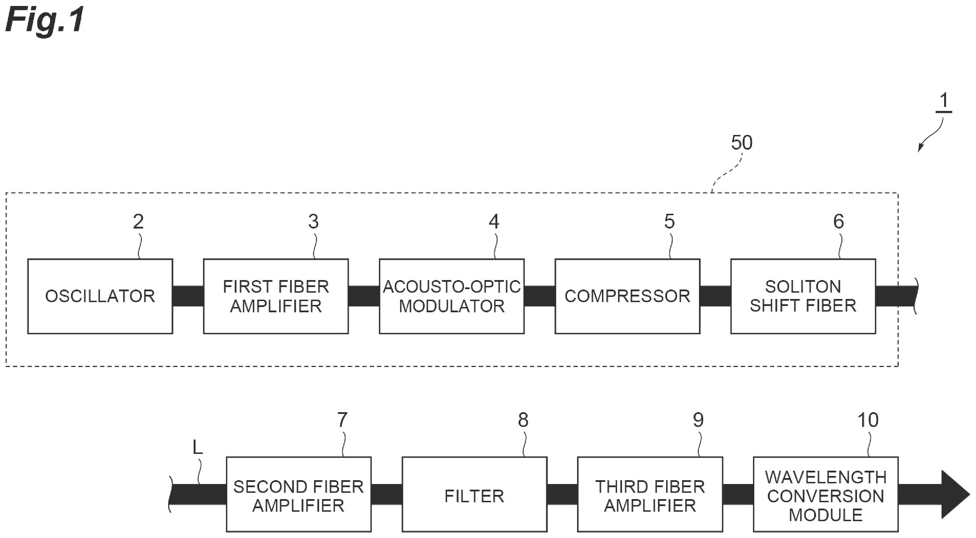

As shown in FIG. 1, a variable-wavelength light source 1 is a laser device in which the wavelength of light to be output is variable. The variable-wavelength light source 1 is an ultrashort pulse laser device capable of rapidly varying the wavelength of pulsed light for each pulse and capable of amplifying pulsed light at all wavelengths within a variable wavelength band. For example, the variable-wavelength light source 1 is a femtosecond laser device and is used, for example, in a two-photon microscope. The variable-wavelength light source 1 includes an oscillator 2, a first fiber amplifier 3, an acousto-optic modulator 4, a compressor 5, a soliton shift fiber 6, a second fiber amplifier 7, a filter 8, a third fiber amplifier 9, and a wavelength conversion module 10.

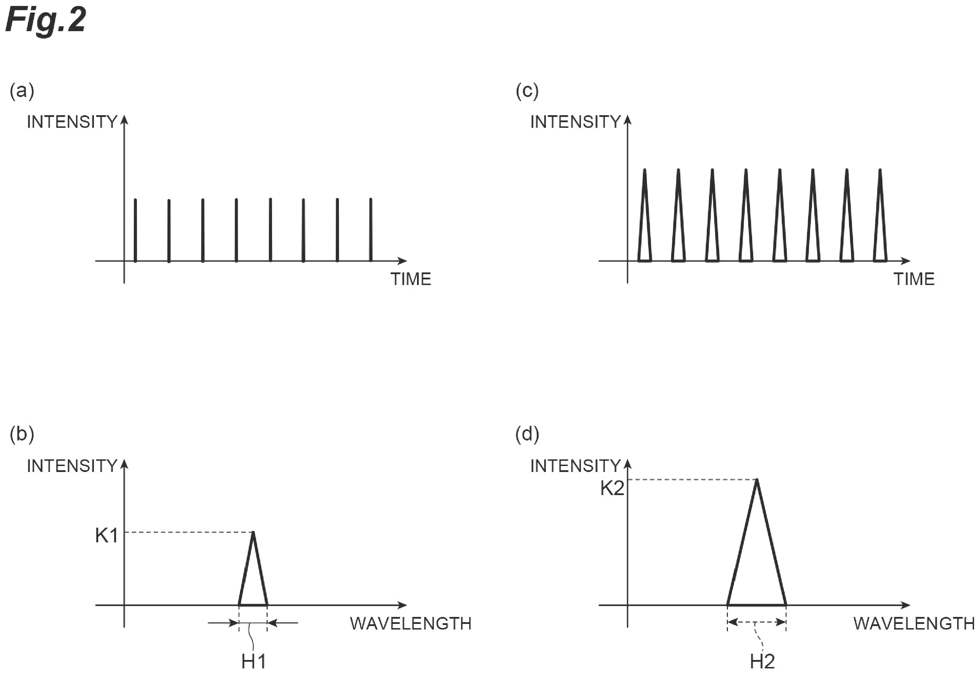

The oscillator 2 constitutes an oscillation unit that oscillates ultrashort pulsed light L. As shown in FIG. 2(a), the oscillator 2 generates a train of ultrashort pulses having a predetermined period F1. The wavelength band of the ultrashort pulsed light L oscillated from the oscillator 2 may be, for example, a band including 1550 nm. Here, as shown in FIG. 2(b), the oscillator 2 oscillates ultrashort pulsed light L having a spectrum with a first spectral width H1 and a first intensity K1. The oscillator 2 is not particularly limited, and various oscillators can be used.

The first fiber amplifier 3 constitutes an amplification unit that broadens the spectrum of the ultrashort pulsed light L oscillated by the oscillator 2. The first fiber amplifier 3 broadens the spectrum of the ultrashort pulsed light L and increases the power of the ultrashort pulsed light L according to similariton amplification. The first fiber amplifier 3 is arranged between the oscillator 2 and the soliton shift fiber 6 on the optical path of the ultrashort pulsed light L.

The first fiber amplifier 3 is configured to include a normal-dispersion fiber and an excitation light source. The normal-dispersion fiber is a double-clad fiber co-doped with erbium and ytterbium. That is, the first fiber amplifier 3 performs amplification while causing nonlinear effects in the normal-dispersion double-clad fiber so as not to stretch, thereby acquiring ultrashort pulsed light L as broadband amplified light. The normal-dispersion fiber is a fiber in a state in which a dispersion parameter D (ps/nm/km) is negative. The dopant used in the first fiber amplifier 3 is not particularly limited, and various dopants may be adopted.

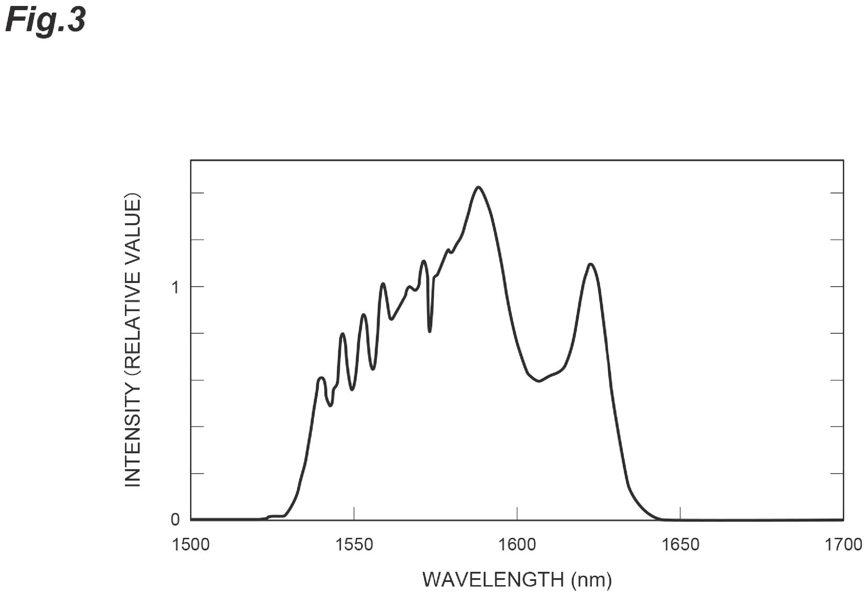

As shown in FIGS. 2(c) and 2(d), the first fiber amplifier 3 broadens a spectral width of the ultrashort pulsed light L to a second spectral width H2 that is wider than a first spectral width H1. The first fiber amplifier 3 increases the intensity of the ultrashort pulsed light L to a second intensity K2 that is higher than a first intensity K1. Specifically, as shown in FIG. 3, the first fiber amplifier 3 sets the spectral width of the ultrashort pulsed light L to 100 nm or more. In FIG. 3, the horizontal axis represents a wavelength of the ultrashort pulsed light L, and the vertical axis represents a relative value of the intensity of the ultrashort pulsed light L based on a predetermined intensity.

The acousto-optic modulator 4 constitutes a light intensity control unit that controls the intensity of the ultrashort pulsed light L for each pulse. The acousto-optic modulator 4 is a device that modulates the ultrashort pulsed light L using an acoustic (sound wave) force and is referred to as an acousto-optic modulator (AOM). In the present embodiment, the acousto-optic modulator 4 is arranged between the first fiber amplifier 3 and the soliton shift fiber 6 in the optical path of the ultrashort pulsed light L. In addition, the acousto-optic modulator 4 may be arranged at any position between the oscillator 2 and the soliton shift fiber 6.

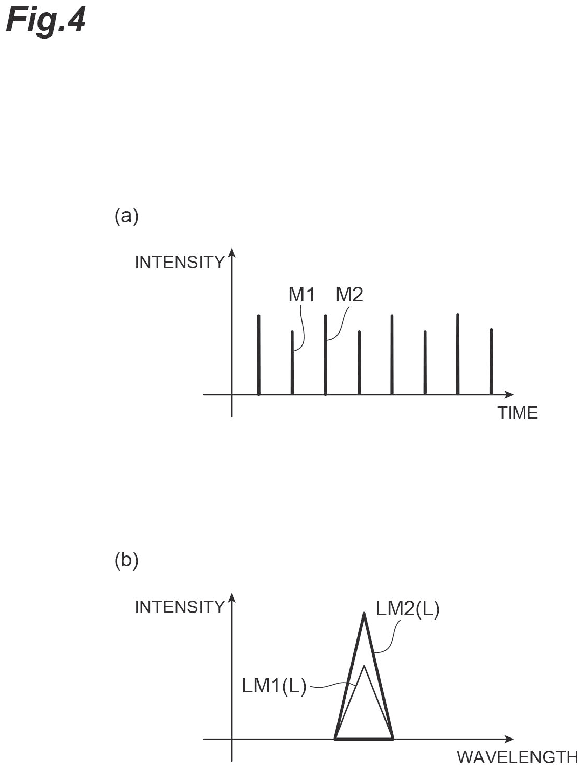

As shown in FIGS. 4(a) and 4(b), the acousto-optic modulator 4 controls the intensity of the ultrashort pulsed light L to vary for each pulse. For example, when intensity modulation of M1 and M2 is applied as shown in FIG. 4(a), ultrashort pulsed light LM1 and LM2 corresponding to the intensities M1 and M2 is generated as shown in FIG. 4(b). The range and accuracy of intensity modulation of the ultrashort pulsed light L (LM1 and LM2) depend on the performance of the acousto-optic modulator 4. The intensity of pulsed light in the pulse train of the ultrashort pulsed light L can be arbitrarily modulated by the acousto-optic modulator 4.

The compressor 5 constitutes a pulse compression unit that compresses the temporal width of pulses of the ultrashort pulsed light L. In the present embodiment, the compressor 5 is arranged between the acousto-optic modulator 4 and the soliton shift fiber 6 in the optical path of the ultrashort pulsed light L. In addition, the compressor 5 may be arranged at any position between the first fiber amplifier 3 and the soliton shift fiber 6. For example, even when the ultrashort pulsed light L is stretched (for example, stretched to several picoseconds) by the first fiber amplifier 3, the compressor 5 compresses the temporal width of the ultrashort pulsed light L to output ultrashort pulsed light L having a temporal width equal to or less than a predetermined spread (less than 1 picosecond). The compressor 5 is not particularly limited, and various compressors may be used.

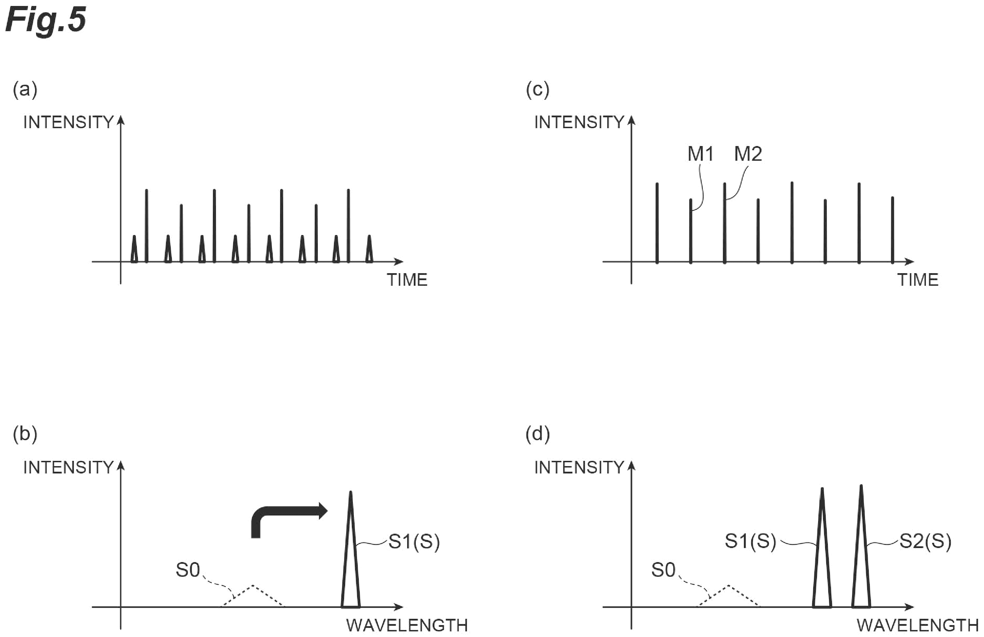

The soliton shift fiber 6 constitutes a modulation unit that modulates the wavelength of the ultrashort pulsed light L, which has been output with increased power while its spectrum is broadened by the first fiber amplifier 3, by using a soliton self-frequency shift (Raman soliton shift). The soliton shift fiber 6 is arranged on a downstream side of the first fiber amplifier 3 on the optical path of the ultrashort pulsed light L. As shown in FIGS. 5(a) and 5(b), the soliton shift fiber 6 varies the wavelength of the ultrashort pulsed light L and generates a soliton S1.

As the soliton shift fiber 6, for example, a single-mode anomalous dispersion fiber that exhibits anomalous dispersion in the wavelength band of the ultrashort pulsed light L generated by the first fiber amplifier 3 can be used. In addition, it is possible to generate solitons having wavelengths different from that of the soliton S1 by controlling the acousto-optic modulator 4. In relation to the wavelength of the soliton S, for example, as shown in FIG. 5(c), when modulated with intensities M1 and M2, the soliton S shifts to wavelengths corresponding to the intensities M1 and M2 as shown in FIG. 5(d) (solitons S1 and S2).

The shift wavelength range and accuracy of the soliton S depend on the performance of the acousto-optic modulator 4. The wavelength of each soliton S in a soliton train generated from the pulse train of the ultrashort pulsed light L can be arbitrarily varied by applying intensity modulation to the pulse train in the acousto-optic modulator 4. The soliton shift fiber 6 is capable of outputting ultrashort pulsed light L (soliton S) in a wavelength band of, for example, 1800 nm to 2200 nm. The oscillator 2, the first fiber amplifier 3, the acousto-optic modulator 4, the compressor 5, and the soliton shift fiber 6 constitute a light output unit 50 that outputs light and is capable of varying the wavelength of the light to be output.

In addition, in the example shown in the drawing, the ultrashort pulsed light L modulated by the soliton self-frequency shift includes a non-soliton component S0 (a component that does not become soliton S1 or S2). In addition, a filter (not shown) for cutting the non-soliton component S0 of the ultrashort pulsed light L may be provided downstream of the soliton shift fiber 6. Such a filter may have an OD value of 3 or more.

The second fiber amplifier 7 constitutes a first optical amplification unit that amplifies the ultrashort pulsed light L whose wavelength has been varied by the soliton shift fiber 6. The second fiber amplifier 7 is configured to include a rare-earth-doped fiber and an excitation light source. The rare-earth-doped fiber is, for example, a Tm fiber. The excitation light source is, for example, a laser diode that outputs excitation light having a wavelength of 1550 nm. The second fiber amplifier 7 is an amplifier optimized for the short-wavelength side. The second fiber amplifier 7 amplifies the ultrashort pulsed light L by allowing the ultrashort pulsed light L serving as the signal light (seed light) to absorb the gain.

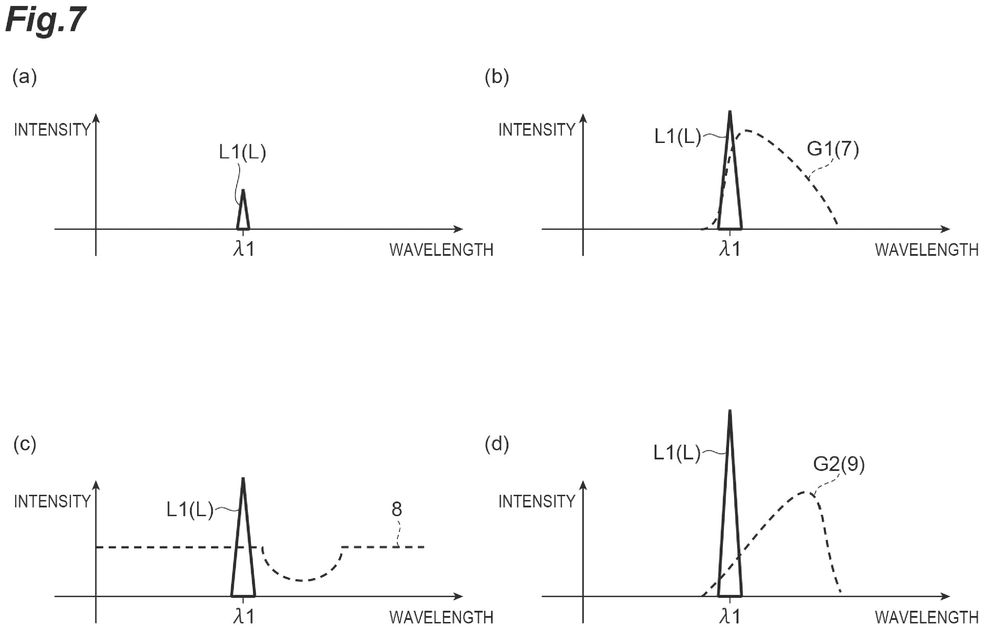

The second fiber amplifier 7 has a higher gain G1 (see FIG. 7(b)) on a first wavelength side, which is the short-wavelength side of the ultrashort pulsed light L, than on a second wavelength side, which is the long-wavelength side. Such characteristics of the second fiber amplifier 7 can be implemented, for example, by adjusting the length of the rare-earth-doped fiber and the concentration of the doped rare earth. As an example, the short wavelength (first wavelength) is a wavelength equal to or greater than 1800 nm and less than 2000 nm, and the long wavelength (second wavelength) is a wavelength equal to or greater than 2000 nm and equal to or less than 2200 nm.

The filter 8 constitutes a filter unit that filters the ultrashort pulsed light L amplified by the second fiber amplifier 7. The filter 8 attenuates amplified spontaneous emission (ASE). Moreover, in the present embodiment, the filter 8 attenuates ASE generated by amplification in the second fiber amplifier 7, and also attenuates light in which a noise component generated by amplification in the second fiber amplifier 7 is amplified and light of a wavelength having a high-gain region. In the present embodiment, light of the wavelength having a high-gain region is light in a predetermined wavelength band in the short-wavelength region that has a particularly high amplification ratio compared to light in other wavelength bands; if such light is not attenuated, only such light is preferentially amplified, which hinders optical amplification over a wide wavelength range. Here, the ASE attenuated by the filter 8 is ASE in a predetermined wavelength band including a wavelength band between the short wavelength and the long wavelength. ASE and light in which noise components are amplified not only hinder amplification but may also cause parasitic oscillation and damage the amplifier system. ASE tends to be generated, for example, when the wavelength band of the seed light does not match the gain wavelength band, when the power of the seed light is low, and the like. Moreover, in the filter 8, pulses in the short-wavelength band are absorbed and contribute to the gain of the following pulses in the long-wavelength band, and there also exists a process for transferring energy from pulses in a region where the gain fiber has a higher gain to pulses in a region where the gain is lower. In addition, the filter 8 may be, for example, one using an AOM (acousto-optic modulator), an EOM (electro-optic modulator), or the like, or a gain fiber such as a Tm fiber, a Ho fiber, or a Tm/Ho fiber to which excitation light is not input. Moreover, the filter 8 may be a gain fiber in a region where excitation light is attenuated by 20 dB or more in the gain fiber of the second fiber amplifier 7.

The third fiber amplifier 9 constitutes a second optical amplification unit that amplifies the ultrashort pulsed light L filtered by the filter 8. The third fiber amplifier 9 is configured to include a rare-earth-doped fiber and an excitation light source. The rare-earth-doped fiber is, for example, a Tm fiber. The excitation light source is, for example, a laser diode that outputs excitation light having a wavelength of 790 nm or a CW laser that outputs excitation light having a wavelength of 1550 nm. The third fiber amplifier 9 is an amplifier optimized for the long-wavelength side. The third fiber amplifier 9 amplifies the ultrashort pulsed light L by allowing the ultrashort pulsed light L serving as signal light to absorb the gain. The third fiber amplifier 9 has a higher gain G2 (see FIG. 7(d)) on a second wavelength side, which is the long-wavelength side of the ultrashort pulsed light L, than on a first wavelength side, which is the short-wavelength side. Such characteristics of the third fiber amplifier 9 can be implemented, for example, by adjusting the length of the rare-earth-doped fiber and the concentration of the doped rare earth.

The wavelength conversion module 10 converts the wavelength of the ultrashort pulsed light L into a target wavelength (for example, a wavelength corresponding to a two-photon microscope). The wavelength conversion module 10 is arranged on the downstream side of the third fiber amplifier 9 on the optical path of the ultrashort pulsed light L. As an example, the wavelength conversion module 10 lowers the intensity of the ultrashort pulsed light L and lowers the wavelength band to a lower wavelength.

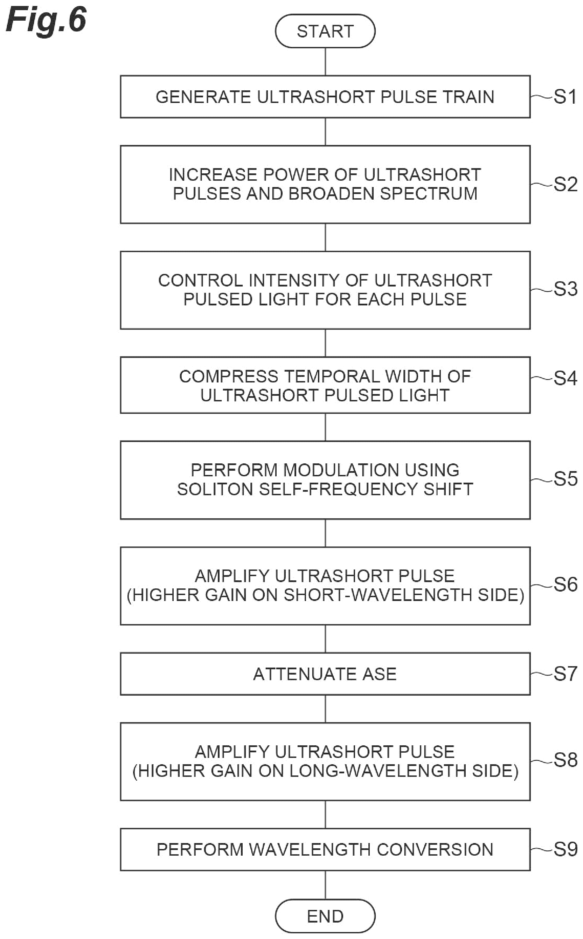

Next, a variable-wavelength method performed using the variable-wavelength light source 1 will be described with reference to the flowchart of FIG. 6.

First, ultrashort pulsed light L is oscillated by the oscillator 2 to generate a train of ultrashort pulses having a predetermined period (oscillation step: Step S1). The first fiber amplifier 3 increases the power of the ultrashort pulsed light L and broadens the spectrum of the ultrashort pulsed light L (amplification step: Step S2). The acousto-optic modulator 4 controls the intensity of the ultrashort pulsed light L for each pulse, for example, in accordance with specifications or conditions required for the variable-wavelength light source 1 (Step S3). The compressor 5 compresses the temporal width of the ultrashort pulsed light L (Step S4). The soliton shift fiber 6 modulates and varies the wavelength of the ultrashort pulsed light L whose spectrum has been broadened, by using a soliton self-frequency shift (Step S5).

Subsequently, the ultrashort pulsed light L whose wavelength has been varied in the above-described Step S5 is amplified by the second fiber amplifier 7 (Step S6). In the above-described Step S6, the ultrashort pulsed light L is amplified with a gain G1 that is higher on the short-wavelength side than on the long-wavelength side. The ultrashort pulsed light L amplified in the above-described Step S6 is filtered by the filter 8 (Step S7). Thereby, ASE in a predetermined wavelength band generated by amplification in the second fiber amplifier 7, light in which noise components are amplified, and light of a wavelength of a high-gain region are attenuated.

Subsequently, the ultrashort pulsed light L filtered in the above-described Step S7 is amplified by the third fiber amplifier 9 (Step S8). In the above-described Step S8, the ultrashort pulsed light L is amplified with a gain G2 that is higher on the long-wavelength side than on the short-wavelength side. Also, the wavelength of the amplified ultrashort pulsed light L is converted into a target wavelength by the wavelength conversion module 10 (Step S9). The above-described Steps S1 to S5 correspond to a light output step of outputting light. The above-described Step S6 corresponds to a first optical amplification step, the above-described Step S7 corresponds to a filtering step, and the above-described Step S8 corresponds to a second optical amplification step.

In the variable-wavelength light source 1 and the variable-wavelength method described above, for example, when the wavelength of the ultrashort pulsed light L output from the light output unit 50 is varied to a short wavelength λ1 as shown in FIG. 7(a), the following functions and effects are obtained. That is, as shown in FIG. 7(b), the ultrashort pulsed light L of the short wavelength λ1 is amplified by the second fiber amplifier 7 having a gain G1 without the generation of ASE (pre-amplification). The pre-amplified ultrashort pulsed light L of the short wavelength λ1 passes through the filter 8 without being particularly attenuated, as shown in FIG. 7(c). Also, as shown in FIG. 7(d), the ultrashort pulsed light L that has passed through the filter 8 is further amplified by the third fiber amplifier 9 having a gain G2. At this time, although the gain G2 is higher on the long-wavelength side, because the ultrashort pulsed light L of the short wavelength λ1 has already been amplified by the second fiber amplifier 7 and is more likely to absorb energy, the ultrashort pulsed light L can also be amplified in the third fiber amplifier 9 while suppressing the generation of ASE (without concern for ASE).

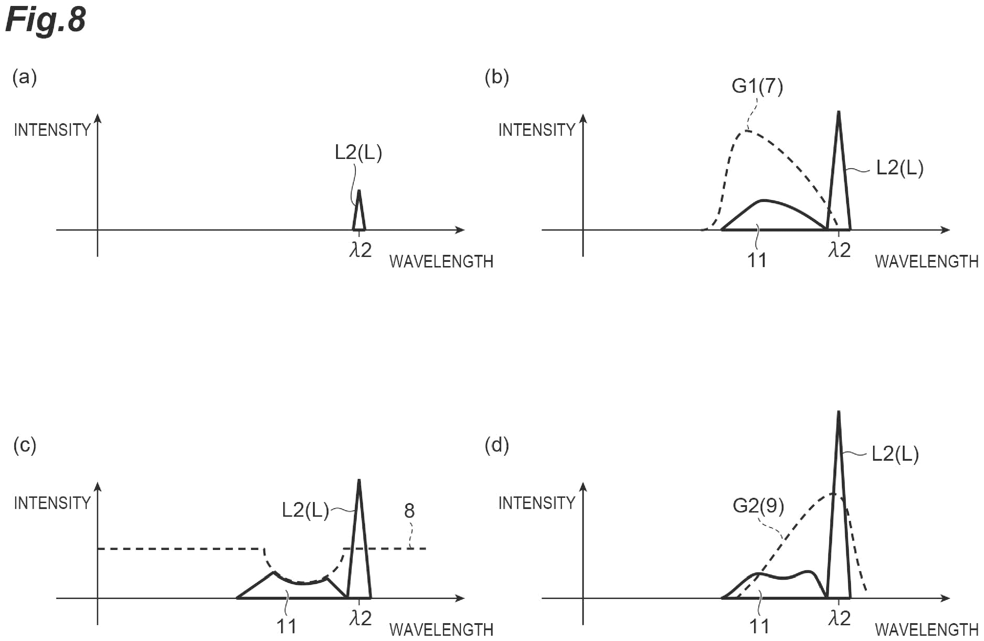

On the other hand, for example, when the wavelength of the ultrashort pulsed light L output from the light output unit 50 is varied to a long wavelength λ2 as shown in FIG. 8(a), the following functions and effects are obtained. That is, as shown in FIG. 8(b), because the ultrashort pulsed light L of the long wavelength λ2 is not significantly amplified compared to the ultrashort pulsed light L on the first wavelength side that is a short wavelength λ1 side, ASE 11 is generated. Thereafter, as shown in FIG. 8(c), the ASE 11 is attenuated by the filter 8. Also, the ultrashort pulsed light L of the long wavelength λ2 is amplified by the third fiber amplifier 9 having the gain G2 without the generation of ASE. Therefore, according to the present embodiment, in the variable-wavelength light source 1 and the variable-wavelength method in which the wavelength of the ultrashort pulsed light L to be output is variable, it is possible to reliably amplify the ultrashort pulsed light L while suppressing ASE 11 over a wide wavelength band. In particular, the present embodiment is effective when optical amplification is performed over a wide wavelength band, and when optical amplification is performed in a wavelength band in which it is difficult to use an optical amplifier adapted to conditions.

In the variable-wavelength light source 1, the light output unit 50 is capable of outputting light in a wavelength band of 1800 to 2200 nm, and the second fiber amplifier 7 and the third fiber amplifier 9 include a Tm fiber. In this case, it is possible to implement an amplification system for ultrashort pulsed light L in the wavelength band of 1800 to 2200 nm using a Tm fiber.

In the variable-wavelength light source 1, the second fiber amplifier 7 enables amplification optimized for the short-wavelength side, and the third fiber amplifier 9 enables amplification optimized for the long-wavelength side. In the variable-wavelength light source 1, the filter 8 attenuates ASE in a predetermined wavelength band including a wavelength band between the short wavelength and the long wavelength. In this case, the filter 8 can effectively attenuate ASE generated by amplification in the second fiber amplifier 7.

In the variable-wavelength light source 1, the light output unit 50 includes the oscillator 2 configured to oscillate ultrashort pulsed light L, the first fiber amplifier 3 configured to broaden the spectrum of the ultrashort pulsed light L, the soliton shift fiber 6 configured to modulate the wavelength of the ultrashort pulsed light L whose spectrum has been broadened using a soliton self-frequency shift, and the acousto-optic modulator 4 arranged between the first fiber amplifier 3 and the soliton shift fiber 6. In this case, the wavelength of the generated ultrashort pulsed light L can be varied for each pulse by the acousto-optic modulator 4. Moreover, it is possible to suppress multi-soliton formation (a phenomenon in which ultrashort pulsed light is split into a plurality of ultrashort pulses according to modulation) by broadening the spectrum of the ultrashort pulsed light L before modulation using a soliton self-frequency shift is performed.

In addition, in the variable-wavelength light source 1, because a fiber laser is used, maintenance-free operation can be achieved compared to when a titanium-sapphire laser is used. In the variable-wavelength light source 1, by adjusting the intensity (output) of the ultrashort pulsed light L input to the soliton shift fiber 6, ultrashort pulsed light L of a desired wavelength can be freely generated. Moreover, because a configuration requiring a physical movable part is not used for wavelength conversion, for example, the wavelength can be varied at a high speed compared to when a titanium-sapphire laser is used.

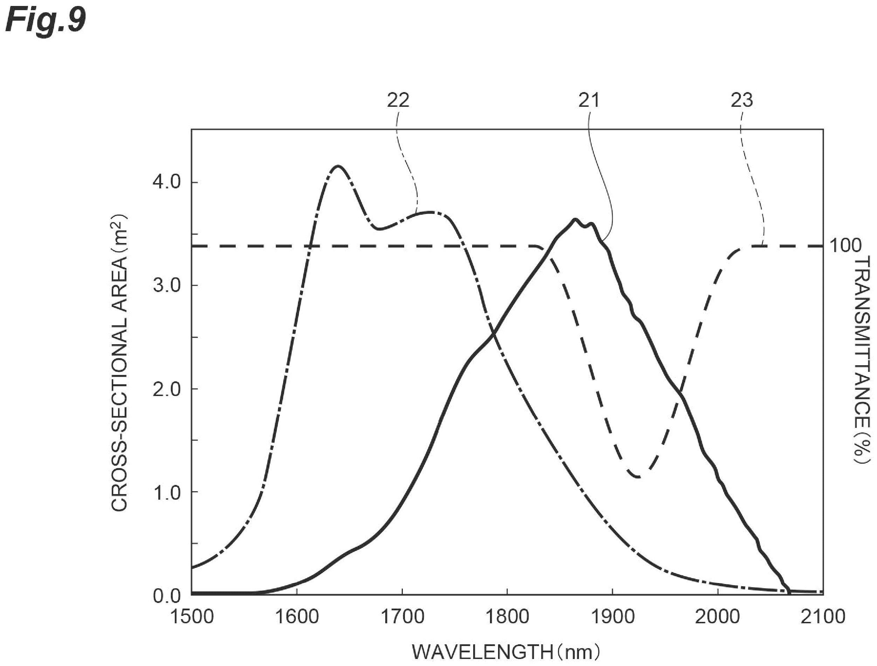

FIG. 9 is a graph showing relationships between the absorption cross-sectional area, the stimulated emission cross-sectional area of the Tm fiber, the transmittance of the filter, and the wavelength. In FIG. 9, the horizontal axis represents a wavelength of the ultrashort pulsed light L, and the vertical axis represents the absorption cross-sectional area, the stimulated emission cross-sectional area of the Tm fiber, and the transmittance of the filter 8. When light having a wavelength of 1800 to 2200 nm is amplified, the Tm fiber has an absorption cross-sectional area 22 and a stimulated emission cross-sectional area 21 shown in FIG. 9. In a fiber amplifier system including the Tm fiber, if the fiber length is short, the gain on the long-wavelength side is insufficient, and thus ASE is likely to be generated during the amplification of light on the long-wavelength side. On the other hand, if the fiber length is long, because absorption also becomes large, light on the short-wavelength side is excessively absorbed. Therefore, ASE is likely to be generated during the amplification of light on the short-wavelength side. In this regard, in the present embodiment, as described above, the fiber amplifiers including the Tm fiber are arranged in two stages, namely the second fiber amplifier 7 and the third fiber amplifier 9. Also, when the filter 8 having a transmittance 23 (dotted line in the drawing) is inserted between the second fiber amplifier 7 and the third fiber amplifier 9, ASE is removed, thereby enabling amplification of broadband variable-wavelength laser light.

In the present embodiment, broadband ultrashort pulsed light L can be amplified without amplifying broadband ultrashort pulsed light L in a separate mechanism. Broadband ultrashort pulsed light L can be amplified without using nonlinear optical effects such as Raman amplification. According to the present embodiment, a broadband and high-power (for example, 30 dBm or more) amplifier system can be configured. According to the present embodiment, it is also possible to prevent parasitic oscillation due to an increase in ASE. In the present embodiment, as described above, the variable-wavelength light source 1 is used in a two-photon microscope. In this case, because high-power amplification is possible in a broadband wavelength band, high-power and multi-wavelength imaging can be achieved in a two-photon microscope in combination with a wavelength conversion system of a subsequent stage.

In the variable-wavelength method of the present embodiment, in the filtering step (the above-described Step S7), energy is transferred from the ultrashort pulsed light L of the short wavelength λ1 to the ultrashort pulsed light L of the long wavelength λ2. In this case, it is possible to adjust the wavelength dependence of a gain in both the second fiber amplifier 7 and the third fiber amplifier 9 by transferring energy from the ultrashort pulsed light L of the short wavelength λ1 to the ultrashort pulsed light L of the long wavelength λ2.

An aspect of the present disclosure as described above is not limited to the above-described embodiment.

Although a Tm fiber is given as an example of the fiber included in the second fiber amplifier 7 and the third fiber amplifier 9 in the above-described embodiment, the laser medium added to the fiber is not particularly limited, and Ho or a laser medium co-doped with Tm and Ho may be used. That is, the rare-earth-doped fiber that is a fiber included in the second fiber amplifier 7 and the third fiber amplifier 9 may be a Ho fiber or a Tm/Ho fiber. Moreover, the base material of the fiber may be a fluoride glass typified by a ZBLAN fiber, or a chalcogenide glass such as a selenide, sulfide, or telluride in addition to silica glass. In the above-described embodiment, for gain flattening and/or output power enhancement, for example, a filter and/or an optical amplifier may be additionally provided at a subsequent stage.

Although the first wavelength is a short wavelength shorter than the second wavelength (and the second wavelength is a long wavelength longer than the first wavelength) in the above-described embodiment, the first wavelength and the second wavelength are not particularly limited. It is only necessary for the second wavelength to be different from the first wavelength. Although the second fiber amplifier 7 is optimized for the short-wavelength side and the third fiber amplifier 9 is optimized for the long-wavelength side in the above-described embodiment, the present disclosure is not limited thereto, and the second fiber amplifier 7 may be optimized for the long-wavelength side and the third fiber amplifier 9 may be optimized for the short-wavelength side.

Although the wavelength of the ultrashort pulsed light L is varied using modulation by a soliton self-frequency shift in the above-described embodiment, the present disclosure is not limited thereto, and the wavelength of the ultrashort pulsed light L may be varied using various known techniques. Although ultrashort pulsed light L is output in the above-described embodiment, the present disclosure is not limited thereto, and other light may be output.

Although a fiber amplifier of a double-clad fiber that is a normal-dispersion fiber is used as the first fiber amplifier 3 in the above-described embodiment, a fiber amplifier of a single-clad fiber (for example, erbium-doped) that is a normal-dispersion fiber may be used instead of this. Even, in this case, at least the spectrum of the ultrashort pulsed light L can be broadened.

The configurations in the above-described embodiment and the above-described modification examples are not limited to the materials and shapes described above, and various materials and shapes may be applied. Moreover, the configurations in the above-described embodiment and the modification examples described above may be arbitrarily applied to configurations in other embodiments or modification examples.

### Reference Signs List

1 Variable-wavelength light source, 2 Oscillator (light output unit, oscillation unit), 3 First fiber amplifier (light output unit, amplification unit), 4 Acousto-optic modulator (light output unit, light intensity control unit), 5 Compressor (light output unit), 6 Soliton shift fiber (light output unit, modulation unit), 7 Second fiber amplifier (first optical amplification unit), 8 Filter (filter unit), 9 Third fiber amplifier (second optical amplification unit), 50 Light output unit, G1 Gain, G2 Gain, L Ultrashort pulsed light (light, pulsed light)

## Claims

1. A variable-wavelength light source comprising:
a light output unit configured to output light and vary a wavelength of the light to be output;
a first optical amplification unit configured to amplify the light output by the light output unit;
a filter unit configured to filter the light amplified by the first optical amplification unit; and
a second optical amplification unit configured to amplify the light filtered by the filter unit,
wherein the first optical amplification unit has a gain on a first wavelength side higher than a gain on a second wavelength side, a second wavelength of the second wavelength side being different from a first wavelength of the first wavelength side,
wherein the second optical amplification unit has the gain on the second wavelength side higher than the gain on the first wavelength side, and
wherein the filter unit attenuates amplified spontaneous emission.

2. The variable-wavelength light source according to claim 1,
wherein the light output unit is capable of outputting light in a wavelength band of 1800 to 2200 nm, and
wherein the first optical amplification unit and the second optical amplification unit include a Tm fiber.

3. The variable-wavelength light source according to claim 1 or 2, wherein the first wavelength is shorter than the second wavelength.

4. The variable-wavelength light source according to claim 1 or 2, wherein the filter unit attenuates the amplified spontaneous emission in a predetermined wavelength band including a wavelength band between the first wavelength and the second wavelength.

5. The variable-wavelength light source according to claim 1 or 2, wherein the light output unit includes:
an oscillation unit configured to oscillate pulsed light;
an amplification unit configured to broaden a spectrum of the pulsed light oscillated by the oscillation unit;
a modulation unit configured to modulate a wavelength of the pulsed light whose spectrum has been broadened by the amplification unit using a soliton self-frequency shift; and
a light intensity control unit arranged between the amplification unit and the modulation unit on an optical path of the pulsed light and configured to control an intensity of the pulsed light for each pulse.

6. A variable-wavelength method comprising:
a light output step of outputting light;
a first optical amplification step of amplifying the light output in the light output step;
a filtering step of filtering the light amplified in the first optical amplification step; and
a second optical amplification step of amplifying the light filtered in the filtering step,
wherein the light output step includes a step of varying a wavelength of the light to be output,
wherein, in the first optical amplification step, the light is amplified by a first optical amplification unit having a higher gain on a first wavelength side of the light than on a second wavelength side different from the first wavelength,
wherein, in the second optical amplification step, the light is amplified by a second optical amplification unit having the gain on the second wavelength side higher than the gain on the first wavelength side, and
wherein, in the filtering step, amplified spontaneous emission of a predetermined wavelength band including a wavelength band between the first wavelength and the second wavelength is attenuated.

7. The variable-wavelength method according to claim 6, wherein, in the filtering step, energy is transferred from the light of the first wavelength to the light of the second wavelength.
